# FASCICULE DE BREVET EUROPEEN

(11) **EP 0 449 842 B1**
(45) Date de publication et mention de la délivrance du brevet: **19.01.1994**
(21) Numéro de dépôt: 89912455.6
(22) Date de dépôt: 20.10.1989
(51) Int. Cl.: B65G 49/06

(54) **DISPOSITIF POLYVALENT POUR LE RELEVAGE RAPIDE DE PLAQUES DE VERRE**
POLYVALENTE VORRICHTUNG ZUM SCHNELLEN ABHEBEN VON GLASSCHEIBEN
POLYVALENT DEVICE FOR FAST LIFTING OF GLASS PLATES

(43) Date de publication de la demande: 09.10.1991
(73) Titulaire: SOCIETE GENERALE POUR LES TECHNIQUES NOUVELLES S.G.N. Société anonyme dite:, 78184 Saint-Quentin-en-Yvelines Cédex (FR)
(72) Inventeur: FAVRE, Serge, F-40400 Tartas (FR)
(74) Mandataire: Le Roux, Martine
(86) Numéro de dépôt international: FR8900549
(87) Numéro de publication internationale: WO9105722

(56) Documents cités:
- EP-A- 0 243 236
- EP-A- 0 359 671
- DE-A- 1 596 591
- DE-A- 2 160 765
- FR-A- 2 348 875

## Description

L'invention concerne un dispositif pour le relevage rapide de plaques de verre, ce dispositif pouvant être adapté à des dimensions variées de plaques (polyvalence).

Les plaques de verre sont saisies en position quasi horizontale, sur un convoyeur par exemple, et déposées en position quasi verticale, en pile sur un pupitre par exemple. Une telle opération est appelée relevage.

Actuellement, la machine de relevage est conçue pour des dimensions bien définies de plaques.

Ainsi on a des machines de relevage pour des plaques de petites dimensions (longueur = 600 à 1 200 mm, largeur = 400 à 600 mm), elles fonctionnent à des cadences très rapides : une plaque relevée toutes les 2 s) ou plus généralement rapides (3 - 4 s).

On dispose également sur le marché de machines étudiées pour des plaques de moyennes dimensions (longueur = 1 000 mm à 1 300 mm, largeur = 1 800 à 3 500 mm) qui fonctionnent avec des cadences plus lentes (plus de 6 s).

Le document EP-A-0 243 236 illustre une machine de relevage pour plaques de petites dimensions. Elle comporte des bras montés perpendiculairement à un arbre qui les entraîne en rotation, des moyens de préhension (ventouses) montés à l'extrémité de chaque bras, et lesdits bras peuvent coulisser perpendiculairement audit arbre.

Pour permettre une économie financière et un gain de place au niveau de l'installation, la présente invention propose une machine de relevage simple compacte, capable de prendre des plaques de dimensions variées, et qui permet des cadences rapides (une plaque relevée toutes les 4 s ou plus de 4 s).

Plus précisément, le dispositif pour le relevage de plaques de verre arrivant sur un convoyeur horizontal objet de l'invention comporte :
- au moins un bras tournant, autour d'un axe horizontal situé à l'extrémité basse dudit bras, entre une position sensiblement verticale pour la saisie de la plaque et une position sensiblement horizontale pour sa dépose, ledit dispositif comportant également des moyens pour faire tourner ledit bras,
- un support monté sur l'extrémité haute de chaque bras tournant, ledit support pouvant coulisser selon l'axe dudit bras et ledit support portant des ventouses pour la préhension des plaques ; le(s) dit(s) bras tournant(s), support(s) et ventouses étant disposés symétriquement par rapport à l'axe du convoyeur, leur nombre et leur disposition étant déterminés en fonction des dimensions des plaques à relever,
- au moins deux bras rétractables solidaires du(des) support(s) pouvant tourner entre une position quasi horizontale de travail et une position quasi verticale de repos autour d'un axe horizontal porté par le(s) dit(s) support(s), chaque bras comportant des ventouses de préhension, lesdits bras et ventouses étant disposés symétriquement par rapport à l'axe du convoyeur et de façon à ce que les plaques de grandes dimensions soient saisies en équilibre,
- des moyens pour actionner et commander de façon synchronisée lesdits bras rétractables, le (les) support(s) et les ventouses.

L'invention sera mieux suivie à partir de figures :
- la figure 1 montre une vue latérale du dispositif,
- la figure 2 est une vue de dessus d'un mode de réalisation avantageux du dispositif selon l'invention,
- la figure 3 montre un mode de réalisation avantageux avec accumulateur à azote.

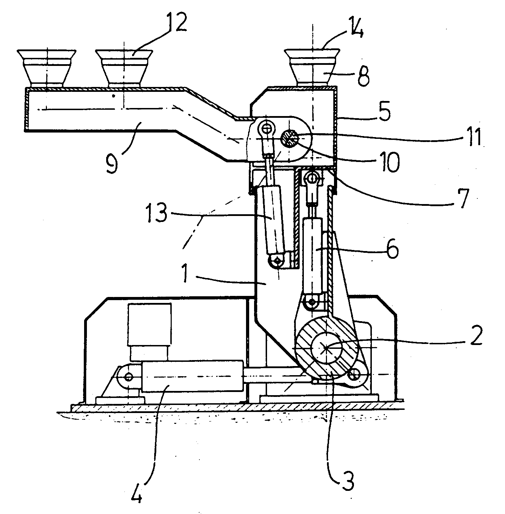

Selon la figure 1, le dispositif objet de l'invention comporte au moins un bras tournant (1) autour de l'axe (2) d'un arbre horizontal (3) placé à l'extrémité basse dudit bras (1).

Sur la figure 1, on ne voit qu'un bras ; il peut en exister d'autres placés sur le même axe de rotation qui ne sont pas schématisés en coupe.

La rotation est obtenue au moyen par exemple d'un vérin (4) agissant sur l'axe (2) de l'arbre (3). D'autres moyens pour actionner le bras peuvent convenir.

Le(s) bras tourne(nt) entre une position sensiblement verticale, correspondant à la saisie des plaques, et une position sensiblement horizontale correspondant à la dépose des plaques.

A l'autre extrémité de chaque bras (extrémité haute), un support (5) est disposé qui peut coulisser le long dudit bras (1).

Le coulissement est obtenu par exemple au moyen d'un vérin (6) placé avantageusement à l'intérieur duudit bras (1) (pour limiter l'encombrement sur la machine).

Comme le montre la figure 1, le vérin (6) est solidaire d'une surface d'appui (7) du support (5) pour permettré la montée ou la descente dudit (desdits) support(s) (5) le long du bras. Des moyens sont évidemment prévus pour actionner le vérin (6).

L'extrémité haute de chaque support comporte des ventouses (8) ou autres moyens pour la préhension des plaques de verre. Ces ventouses ou moyens peuvent être montés directement sur le support ou sur des doigts fixés au support.

Des moyens pour la mise en dépression ou la mise à l'air des ventouses sont prévus et en général des moyens pour actionner lesdits moyens de préhension.

Le dispositif comporte également selon l'invention au moins deux bras rétractables.

La figure 1 montre un bras rétractable (9) solidaire du support (5). Ledit bras peut tourner autour de l'axe horizontal (10) de l'arbre (11) monté dans le support (5). Il comporte des ventouses (12) ou autres moyens pour la préhension des plaques.

Il peut passer d'une position horizontale de travail à une position rétractée de repos. La position horizontale correspond à la saisie de plaques de plus grandes dimensions.

La position rétractée correspond à la saisie de plaques de petites dimensions qui ne fait intervenir que le (ou les) bras tournant(s) (1). Les ventouses (12) des bras rétractables n'interviennent donc pas, seules les ventouses (8) sont activées dans ce cas.

La rotation des bras rétractables est obtenue par exemple au moyen d'un vérin (13) positionné à l'intérieur de l'ensemble bras tournant(s) (1)/support (5) correspondant.

Les bras rétractables (9) doivent être au nombre de deux pour que la plaque soit relevée en équilibre.

Dans ce même but, ils sont disposés symétriquement par rapport à l'axe du convoyeur. On note que la plaque arrivant au poste de saisie a été focalisée sur le convoyeur et qu'elle est dans une position déterminée et connue permettant son relevage.

Le nombre et la disposition des ventouses (12) sur les bras rétractables sont également choisis pour que des grandes plaques soient relevées en équilibre. Ce nombre et cette disposition ne sont pas déterminés indépendamment du nombre et de la disposition des ventouses (8) : ils sont tels que chaque ventouse supporte sensiblement la même surface de verre.

Il est bien évident que la disposition des bras rétractables, leur géométrie et la disposition des ventouses sont également déterminées pour que les bords de la plaque soient supportés et que les bras puissent être rétractés.

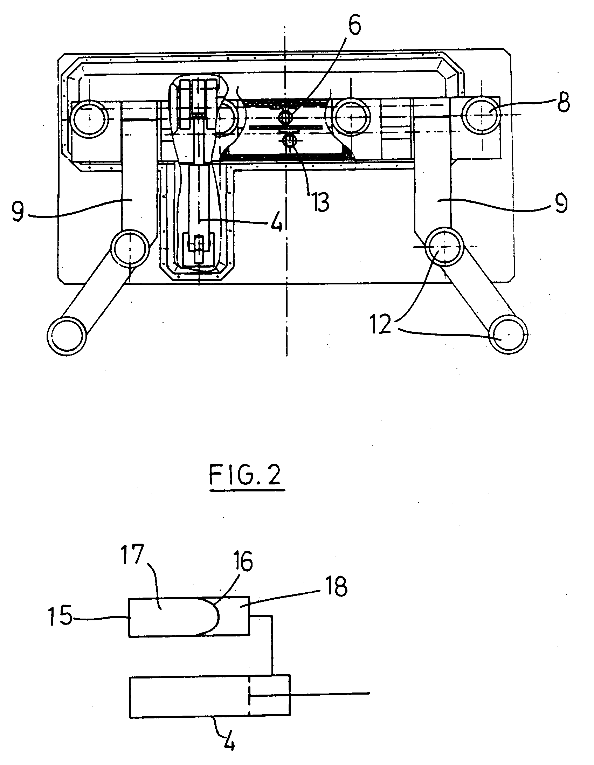

La figure 2 présente une vue de dessus d'un dispositif selon l'invention comportant un seul bras (1) (mal vu sur cette figure) avec un support (5) unique couvrant presque toute la largeur du convoyeur (dimension perpendiculaire à l'axe du convoyeur, la dimension selon l'axe étant la longueur).

Le bras est actionné par le vérin (4). A l'intérieur du bras, on distingue les vérins (6) et (13) pour actionner le support et l'arbre supportant les bras rétractables (9).

La figure 2 montre deux bras rétractables (9) symétriquement par rapport à l'axe du convoyeur, qui est aussi l'axe du bras tournant unique. Chaque bras supporte des ventouses (12).

Les ventouses et bras rétractables sont disposés de façon à ce que la grande plaque saisie soit en équilibre.

Les bras (9) sont de préférence coudés pour faciliter leur rétractation en position quasi verticale.

On comprend aisément le fonctionnement d'un tel dispositif pour saisir une grande plaque.

Pour faciliter l'explication, on prendra le mode de réalisation avec un seul bras tournant, deux bras rétractables et des vérins de commande, mais le même fonctionnement est applicable à tout autre mode de réalisation.

Une plaque arrive sur le convoyeur au poste de saisie.

Le bras tournant (1) est vertical de façon à ce que la surface active des ventouses soit parallèle à la plaque. Les bras rétractables sont amenés en position horizontale (de travail) parallèle à la plaque, au moyen du vérin (13).

Le support (5) est relevé grâce au vérin (6) de façon à ce que les ventouses (8) et (12) mises sous dépression soient au contact de la plaque.

Le bras tournant est amené en position quasi horizontale pour la dépose de la plaque sur un pupitre ou autre moyen. Les ventouses sont mises à l'air, on peut même insuffler de l'air dans les ventouses pour faciliter la dépose.

Le support (5) est abaissé par le vérin tandis que les bras (9) sont rétractés pour permettre le passage du dispositif de relevage sous la nouvelle plaque déjà en place au poste de saisie.

Selon un mode de fonctionnement plus avantageux, après saisie de la plaque, le support (5) est abaissé alors que la rotation du bras tournant commence. Le support (5) est avancé à nouveau pour venir déposer la plaque sur le pupitre ou sur un centre moyen. Ainsi, la plaque est "jetée" sur le pupitre, lorsqu'il y a simultanément soufflage d'air par les ventouses.

Toutes ces opérations sont commandées automatiquement par des moyens appropriés assurant une synchronisation desdites opérations.

Pour la saisie d'une petite plaque, les bras (9) sont rétractés, seuls le(s) bras tournant(s) (1) et les ventouses (8) sont activés.

Lorsqu'on a des cadences rapides, comme c'est le cas sur cette machine, des effets de chocs se produisent bien qu'on contrôle les accélérations et décélérations.

Pour amortir les mouvements, on dispose avantageusement d'un vérin (4) hydraulique de commande du (des) bras tournant(s) (1) et d'un accumulateur à azote (15) monté sur ledit vérin (4) , dispositif représenté figure 3.

Le fonctionnement est le suivant. Le vérin (4) comporte un piston percé qui permet le passage de l'huile d'un compartiment à l'autre selon le mouvement de la tige du piston.

Ce vérin est également relié à l'accumulateur à azote (15) constitué par un récipient muni d'une paroi mobile (16) le séparant en deux chambres, l'une (17) est fermée et contient l'azote, l'autre (18) est reliée au vérin (4).

La rentrée de la tige du vérin (4) pour amener la plaque du poste de saisie au poste de dépose chasse l'huile vers le compartiment (18) de l'accumulateur.

Par contre, la sortie de cette tige autorise le retour le cette huile, d'où une restitution d'énergie pour la remontée du bras tournant du poste de dépose au poste de saisie.

On pourraît également utiliser des vérins hydrauliques (6) et (13) et monter des accumulateurs à azote sur ces vérins.

L'avantage principal d'un tel dispositif est sa polyvalence (prise de plaques de dimensions variées) pour des cadences compétitives (jusqu'à 2 s pour de petites plaques, et plus de 4 s pour des plaques plus grandes) et pour une simplicité de conception et de mise en oeuvre.

De préférence, cette machine est utilisée pour des plaques allant jusqu'à 2 m x 1,5 m.

## Revendications

1. Dispositif pour le relevage de plaques de verre arrivant sur un convoyeur, comportant au moins un bras tournant (1) autour d'un axe horizontal (2), situé à l'extrémité basse dudit bras, entre une position sensiblement verticale pour la saisie de la plaque sur le convoyeur et une position sensiblement horizontale pour leur dépose, ledit dispositif comportant également des moyens pour faire tourner ledit bras, caractérisé en ce qu'il comporte :
- un support (5) monté sur l'extrémité haute de chaque bras tournant (1), ledit support (5) pouvant coulisser selon l'axe dudit bras et ledit support (5) portant des ventouses (8) pour la préhension des plaques ; le(s) dit(s) bras tournant(s) (1), support(s) (5) et ventouses (8) étant disposés symétriquement par rapport à l'axe du convoyeur, leur nombre et leur disposition étant déterminés en fonction des dimensions des plaques à relever,
- au moins deux bras rétractables (9) solidaires du(des) support(s) (5) pouvant tourner entre une position quasi horizontale de travail et une position rétractée de repos autour d'un axe horizontal (10) porté par le(s) dit(s) support(s) (5), chaque bras (9) comportant des ventouses de préhension (12), lesdits bras (9) et ventouses (12) étant disposés symétriquement par rapport à l'axe du convoyeur et de façon à ce que les plaques de grandes dimensions soient saisies en équilibre,
- des moyens pour actionner et commander de façon synchronisée lesdits bras rétractables (9), le (les) support(s) (5) et les ventouses (8, 12).

2. Dispositif selon la revendication 1, caractérisé en ce que lesdits moyens pour actionner lesdits bras rétractables (9) consistent en un vérin (13) positionné à l'intérieur de l'ensemble bras tournant (1)/support (5) correspondant et portant lesdits bras rétractables(9), ledit vérin (13) agissant sur l'axe horizontal (10) qui transmet le mouvement auxdits deux bras rétractables (9).

3. Dispositif selon l'une des revendications 1 ou 2, caractérisé en ce qu'il comporte un vérin hydraulique (4) agissant sur un arbre horizontal (3) monté à l'extrémité basse du (des) bras tournant(s) (1) et permettant la rotation dudit (desdits) bras (1), et qu'il comporte également au niveau dudit vérin (4) un accumulateur à azote (15) pour amortir les mouvements dudit (desdits) bras tournant(s).

4. Dispositif selon l'une des revendications précédentes, caractérisé en ce que des vérins hydrauliques (6) et (13) actionnent les bras rétractables (9) et le(s) support(s) (5), chaque vérin étant relié à un accumulateur à azote (15).

## Claims

1. Device for lifting sheets of glass brought on a conveyor, comprising at least one arm (1) rotatable about a horizontal spindle (2), situated at the lower end of said arm, between a substantially vertical position for gripping the sheets on the conveyor and a substantially horizontal position for depositing said sheets, means being also provided for rotating the arm, characterized in that said device comprises :
- a support (5) mounted on the upper end of each rotating arm (1), said support (5) being slidable along the axis of said arm and said support (5) carrying suction cups (8) for gripping the sheets; said rotating arm or arms (1), support or supports (5) and suction cups (8) being disposed symmetrically with respect to the conveyor axis, their number and disposition being determined as a function of the dimensions of the sheets to be lifted,
- at least two retractable arms (9) fast with the support or supports (5) which arms are rotatable between a substantially horizontal work position and a retracted rest position about a horizontal axis (10) carried by said support or supports (5), each arm (9) being provided with suction cups (12), said arms (9) and suction cups (12) being disposed symmetrically with respect to the conveyor axis and in such a way that the sheets of large dimensions are gripped while being in equilibrium,
- means for synchronously actuating and controlling said retractable arms (9), support or supports (5) and suction cups (8, 12).

2. Device according to claim 1, characterized in that said means for actuating said retractable arms (9) consist in a jack (13) positioned inside the corresponding assembly constituted of the rotating arm (1) and support (5) and carrying said retractable arms (9), said jack (13) actuating the horizontal axis (10) which transmits the movement to said retractable arms (9).

3. Device according to one of claims claims 1 or 2, characterized in that said device comprises a hydraulic jack (4) actuating a horizontal shaft (3) mounted at the lower end of said rotating arm or arms (1) and allowing the rotation of said arm or arms (1) and in that it further comprises at the level of said jack (4), a nitrogen accumulator (15) provided to dampen the movements of said rotating arm or arms.

4. Device according to one of the preceding claims, characterized in that hydraulic jacks (6) and (13) actuate the retractable arms (9) and the support or supports (5), each jack being connected to a nitrogen accumulator (15).

## Patentansprüche

1. Vorrichtung zum Abheben von auf einem Förderband eintreffenden Glasscheiben mit wenigstens einem Arm (1), der um eine am unteren Ende des Arms angeordnete horizontale Achse (2), zwischen einer im wesentlichen vertikalen Position zum Ergreifen der Platte auf dem Förderband und einer im wesentlichen horizontalen Position zum Absetzen derselben drehbar ist, wobei die Vorrichtung ferner Einrichtungen zum Drehen des Arms aufweist,
gekennzeichnet durch
- einen am oberen Ende jedes drehbaren Arms (1) montierten Träger (5), der entlang der Achse des Arms gleitbeweglich ist und Saugnäpfe (8) zur Handhabung der Platten trägt, und wobei der oder die bewegliche(n) Arm(e) (1), Träger (5) und Saugnäpfe (8) symmetrisch zur Achse des Förderbands angeordnet sind, und ihre Zahl und Anordnung in Abhängigkeit von den Maßen der abzuhebenden Platten bestimmt sind,
- mindestens zwei mit dem oder den Träger(n) verbundene zurückziehbare Arme (9), die zwischen einer ungefähr horizontalen Arbeitsposition und einer zurückgezogenen Ruheposition um eine von dem oder den Träger(n) (5) getragene horizontale Achse (10) drehbar sind, wobei jeder Arm (9) Handhabungssaugnäpfe (12) aufweist und die Arme (9) und Saugnäpfe (12) symmetrisch zur Achse des Förderbands angeordnet sind, so daß großformatige Platten im Gleichgewicht ergriffen werden,
- Einrichtungen zum synchronisierten Betätigen und Steuern der zurückziehbaren Arme (9), des oder der Träger(s) (5) und der Saugnäpfe (8, 12).

2. Vorrichtung nach Anspruch 1, dadurch gekennzeichnet, daß die Einrichtungen zum Betätigen der zurückziehbaren Arme (9) aus einem Stellglied (13) bestehen, das im Inneren der zugehörigen Anordnung aus drehbarem Arm (1) und Träger (5), die die zurückziehbaren Arme (9) trägt, angebracht ist, und daß das Stellglied (13) auf die horizontale Achse (10) wirkt, die die Bewegung auf die beiden zurückziehbaren Arme (9) überträgt.

3. Vorrichtung nach einem der Ansprüche 1 oder 2, dadurch gekennzeichnet, daß sie ein hydraulisches Stellglied (4) umfaßt, das auf eine am unteren Ende des drehbaren Arms oder der drehbaren Arme (1) montierte horizontale Welle (3) wirkt, die die Drehung des Arms oder der Arme (1) ermöglicht, und daß sie in Höhe des Stellglieds (4) einen Stickstoffdruckspeicher (15) zum Dämpfen der Bewegungen des drehbaren Arms oder der drehbaren Arme aufweist.

4. Vorrichtung nach einem der vorherigen Ansprüche, dadurch gekennzeichnet, daß hydraulische Stellglieder (6) und (13) die zurückziehbaren Arme (9) und den oder die Träger (5) betätigen und daß jedes Stellglied mit einem Stickstoffdruckspeicher (15) verbunden ist.
